# FASCICULE DE BREVET EUROPEEN

(11) **EP 0 798 847 B1**
(45) Date de publication et mention de la délivrance du brevet: **26.04.2000**
(21) Numéro de dépôt: 97400665.2
(22) Date de dépôt: 21.03.1997
(51) Int. Cl.: H02M 7/5387, H02M 7/5395

(54) **Convertisseur de fréquence pour moteur alternatif**
Frequenz-Umformer für Wechselstrommotor
Frequency converter for AC motor

(30) Priorité: 28.03.1996 FR 9604038
(43) Date de publication de la demande: 01.10.1997
(73) Titulaire: Schneider Electric Industries SA, 92500 Rueil-Malmaison (FR)
(72) Inventeur: Nguyen Phuoc, Vinh Tung, 92100 Boulogne Billancourt (FR)
(74) Mandataire: Saint Martin, René

(56) Documents cités:
- US-A- 4 520 298
- MOYNIHAN ET AL.: "SINGLE SENSOR CURRENT CONTROL OF AC SERVODRIVES USING DIGITAL SIGNAL PROCESSORS" 13 Septembre 1993 , CONTROL IN POWER ELECTRONICS, BRIGHTON, SEPT. 13 - 16, 1993, VOL. 4, PAGE(S) 415 - 421 , INSTITUTION OF ELECTRICAL ENGINEERS XP000427110 * page 418 *
- EPE'91: 4TH EUROPEAN CONFERENCE ON POWER ELECTRONICS, vol. 3, 1991, FLORENCE, pages 641-648, XP000610779 MOYNIHAN ET AL.: "Indirect phase current detection for field oriented control of a permanent magnet synchronous motor drive"
- YANHONG XUE ET AL: "A STATOR FLUX-ORIENTED VOLTAGE SOURCE VARIABLE-SPEED DRIVE BASED ON DC LINK MEASUREMENT" 1 Septembre 1991 , IEEE TRANSACTIONS ON INDUSTRY APPLICATIONS, VOL. 27, NR. 5, PAGE(S) 962 - 969 XP000264064 * page 965, colonne D, alinéa 1 - page 966, colonne G, alinéa 2 *

## Description

La présente invention se rapporte à un convertisseur de fréquence pour moteur asynchrone comprenant un onduleur de tension pourvu d'interrupteurs pilotés par un circuit de contrôle ***de manière à délivrer au moteur une suite d'impulsions d'amplitude fixe sur une période donnée,*** et alimenté par un bus continu sur lequel est disposé un shunt de mesure du courant continu circulant sur le bus.

Pour assurer la commande d'un moteur alternatif polyphasé tel qu'un moteur asynchrone, on utilise un convertisseur de fréquence qui permet à partir du réseau alternatif, de commander le moteur sous une fréquence et une tension variables. Un tel convertisseur de fréquence comporte un étage redresseur qui fournit, après filtrage, une énergie continue à un onduleur de tension. L'onduleur comporte des interrupteurs Sa, Sb, Sc qui sont commandés par un circuit de contrôle de manière à délivrer au moteur une suite d'impulsions d'amplitude fixe (positive ou négative) et modulées en largeur. Cette technique est appelée modulation de largeur d'impulsions (MLI).

Dans un système triphasé équilibré, une variable peut être représentée par un vecteur dont les composantes, sur trois axes à 120°, sont les valeurs de cette variable sur chaque phase. L'extrémité du vecteur tension de sortie Vs peut prendre huit positions: sur les sommets d'un hexagone (vecteurs V1 à V6) et au centre de l'hexagone (vecteurs nuls V0 et V7). A chaque position du vecteur tension correspond une combinaison de commande des interrupteurs Sa, Sb, Sc.

La technique de la modulation vectorielle consiste à considérer un vecteur tension Vs quelconque comme étant, dans un intervalle de temps Tp, la combinaison de deux vecteurs adjacents et du vecteur nul.

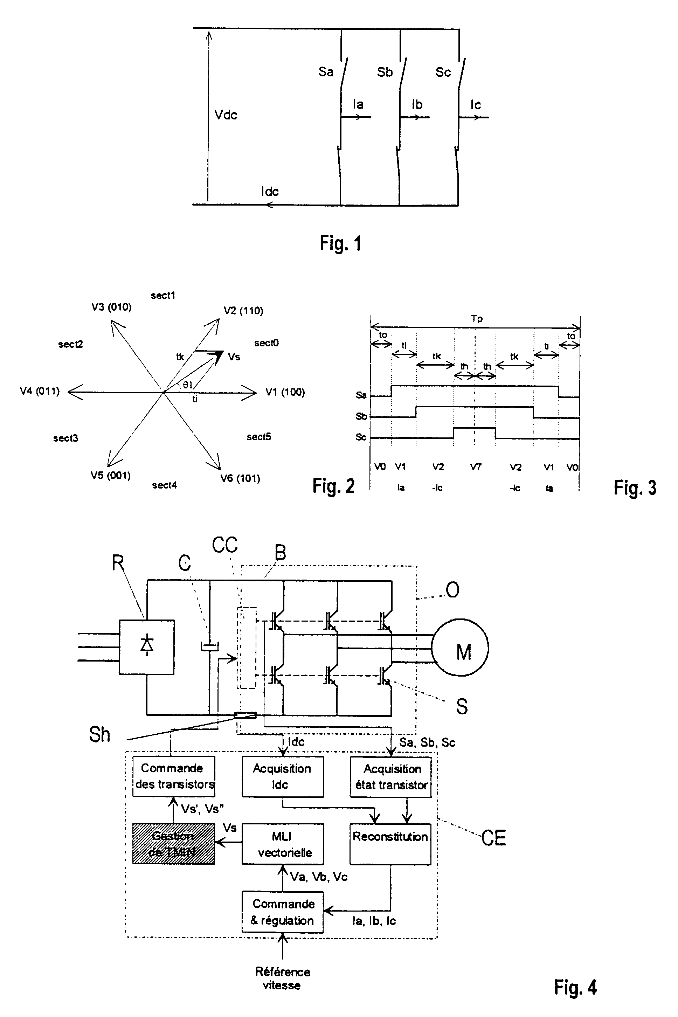

En se référant à la figure 2, un vecteur Vs de tension de sortie peut se trouver dans l'un des six secteurs formés dans l'espace par les vecteurs V1 à V6. Dans l'exemple illustré à la figure 2, Vs se trouve dans le secteur 0, entre les vecteurs adjacents V1 et V2. Le vecteur Vs peut être commandé par ses vecteurs adjacents à savoir V1 et V2 dans le cas évoqué ci-dessus. La durée d'application de chaque vecteur adjacent est déterminée par la projection du vecteur Vs sur l'axe de ce vecteur adjacent. Ces durées ti et tk se calculent en fonction de la période MLI, de la tension bus et de l'angle θ que fait Vs avec le premier vecteur adjacent.

Connaissant les durées ti et tk, on complète la période Tp (inverse de la fréquence de découpage) avec les durées des vecteurs nuls V0 et V7 et cela de façon égale. En adoptant une MLI symétrique, on obtient le schéma de commutation de la figure 3.

Dans le moteur asynchrone, le courant statorique sert à la fois à générer le flux et le couple. On peut décomposer le courant statorique en courant magnétisant Id qui va générer le flux et en courant actif lq qui va générer le couple.

On peut reconstituer les courants de phases la, Ib, Ic en mesurant par un shunt le courant Idc dans le bus et en utilisant les états des interrupteurs Sa, Sb, Sc repérés sur la figure 1. Le courant Idc mesuré par le shunt s'explique en fonction de courants des phase la, Ib, Ic et en fonction des états de commutation des interrupteurs Sa, Sb, Sc (0 ou 1) sous la forme: Idc = Sa.la + Sb.lb +Sc.Ic. Ainsi connaissant l'état de commutation du pont, il est théoriquement possible de reconstituer les courants la, Ib, Ic dans les phases à partir du courant Idc dans le bus. Pour ce faire il faut avoir au moins deux états permettant d'identifier deux courants différents par période de MLI.

Lorsque ***la valeur de la tension de sortie Vs est*** au voisinage de zéro, les durées des états tels que V1 et V2 deviennent petites et il n'est pas possible de mesurer correctement le courant Idc du bus. En effet il faut que les durées des états significatifs soient supérieures à un temps prédéterminé TMIN qui couvre le temps de retard intervoie, le temps de montée et d'établissement du courant dans le shunt, le temps d'acquisition du courant et le temps de traitement.

Le brevet US 4 520 298 porte sur la réalisation de la reconstitution de courants de phases à partir de la mesure de courant dans le bus continu mais n'aborde pas le problème de la reconstitution des courants de phase à basse vitesse .

On a suggéré dans "A Stator Flux-Oriented Voltage Source Variable Speed Drive Based on dc Link Measurement" publié en 1991 dans IEEE, d'annuler et d'accumuler les états de trop faible durée jusqu'à obtenir une durée minimale. A faible vitesse cette solution risque de provoquer des oscillations de tension importantes.

On a proposé dans "Indirect Phase Current Detection for Field Oriented Control of a Permanent Magnet Synchronous Motor Drive" 1991, EPE, de remplacer la durée d'un état lorsqu'elle est insuffisante, par une durée TMIN. Cela peut engendrer des erreurs importantes sur la tension, à basse vitesse. ***De même, dans "Single Sensor Current Control of AC Servodrives using Digital Signal Processors" 13 Sept. 1993, IEE, quand la durée d'un état est inférieure à une durée TMIN, cela entraîne une approximation en boucle ouverte sur la mesure effectuée.***

La présente invention a pour but d'améliorer la reconstitution des courants, à basse vitesse et d'améliorer ainsi les performances du convertisseur de fréquence.

Le convertisseur de fréquence selon l'invention est caractérisé par le fait qu'il comporte des moyens pour calculer, dans le cas où au moins une des deux composantes du vecteur de la tension de sortie est inférieure à une valeur prédéterminée, d'une part un vecteur Vs' dont chacune des composantes est au moins égale à la valeur prédéterminée TMIN, ***valeur couvrant le temps minimal pour pouvoir mesurer le courant Idc circulant sur le bus continu,*** et d'autre part un vecteur Vs" tel que la moyenne vectorielle de Vs' et Vs" soit égale au vecteur de sortie Vs.

Selon une caractéristique, le convertisseur comporte des moyens pour calculer, lorsque le vecteur Vs a une de ses deux composantes qui est inférieure à TMIN, le vecteur Vs' en ajoutant une valeur prédéterminée TMIN à ladite composante.

Selon une autre caractéristique, le convertisseur comporte des moyens pour calculer, dans le cas où les deux composantes du vecteur Vs sont inférieures à TMIN, un vecteur Vs' en ajoutant la valeur prédéterminée TMIN aux deux composantes de ce vecteur Vs.

Selon une autre caractéristique, le vecteur Vs' est appliqué durant la première moitié de la période MLI et que le vecteur Vs" est appliqué durant la seconde moitié de cette même période.

Selon une autre caractéristique, les vecteurs Vs' et Vs" sont appliqués sur deux périodes successives de MLI symétriques.

Selon une autre caractéristique, le convertisseur comporte des moyens pour calculer, lorsque le vecteur Vs a au moins une de ses deux composantes qui est inférieure à la valeur prédéterminée TMIN, le vecteur Vs' en ajoutant une durée qui complète la durée pour avoir juste TMIN.

L'invention va maintenant être décrite avec plus de détail en se référant à un mode de réalisation donné à titre d'exemple et illustré par les dessins annexés sur lesquels:
- la figure 1 est un schéma connu d'onduleur sur lequel on a représenté les courants dans les phases et dans le bus;
- la figure 2 est la représentation vectorielle d'un vecteur tension Vs;
- la figure 3 est un diagramme du schéma de commutation des interrupteurs Sa, Sb, Sc sur une période, dans le cas de la figure 2;
- la figure 4 est un schéma de convertisseur de fréquence selon l'invention;
- la figure 5 est la représentation vectorielle d'un vecteur tension Vs appliquant la compensation selon l'invention, l'une des composantes de ce vecteur étant inférieure à TMIN;
- la figure 6 est un schéma de commutation des interrupteurs Sa, Sb, Sc sur une période, dans le cas de la figure 5;
- la figure 7 est la représentation vectorielle d'un vecteur tension Vs appliquant la compensation selon l'invention, les deux composantes de ce vecteur étant inférieures à TMIN;
- la figure 8 est un schéma de commutation des interrupteurs Sa, Sb, Sc sur une période, dans le cas de la figure 7;
- la figure 9 représente le courant de phase réel (en haut) et le courant de phase reconstitué (en bas), à 7 Hz, dans le cas où l'invention ***n'est pas appliquée;***
- la figure 10 représente le courant de phase réel (en haut) et le courant de phase reconstitué (en bas), à 1 Hz, dans le cas où l'invention est appliquée;
- la figure 11 représente la tension de référence phase-neutre et le courant dans la phase mesuré de manière synchrone avec la MLI, dans le cas où l'invention est appliquée.

Le convertisseur de fréquence illustré à la figure 4 comporte un étage redresseur R qui fournit, après filtrage par un condensateur C une énergie continue, via un bus continu B, à un onduleur de tension O. L'onduleur de tension O comporte des interrupteurs S qui sont commandés par un circuit de contrôle CC de manière à délivrer au moteur M une suite d'impulsions d'amplitude fixe ( positive ou négative) et modulées en largeur. Cette technique est appelée modulation de largeur d'impulsions (MLI). Le circuit CC reçoit trois références de tension venant d'un circuit de traitement CE et se charge d'imposer les tensions au moteur M selon la technique de MLI. La génération de tension, l'acquisition et la reconstitution des courants est faite dans le circuit de traitement CE.

Le courant Idc dans le bus B est mesuré par un shunt Sh. Les états des transistors Sa, Sb, Sc sont pris en sortie du circuit CC et sont envoyés au circuit CE. Ce circuit de traitement CE schématisé à la figure 4, comporte des moyens pour lire la référence de vitesse, pour acquérir et décoder les états transistors Sa, Sb, Sc et le courant bus Idc, pour reconstituer les courants de phase la, Ib, Ic, pour calculer selon la méthode de modulation vectorielle les ordres de commutation des transistors Sa, Sb, Sc.

Le circuit CE calcule les ordres de commutation des transistors par une méthode spécifique objet de l'invention lorsqu'au moins une des composantes du vecteur de tension de sortie Vs est inférieure à une valeur prédéterminée TMIN.

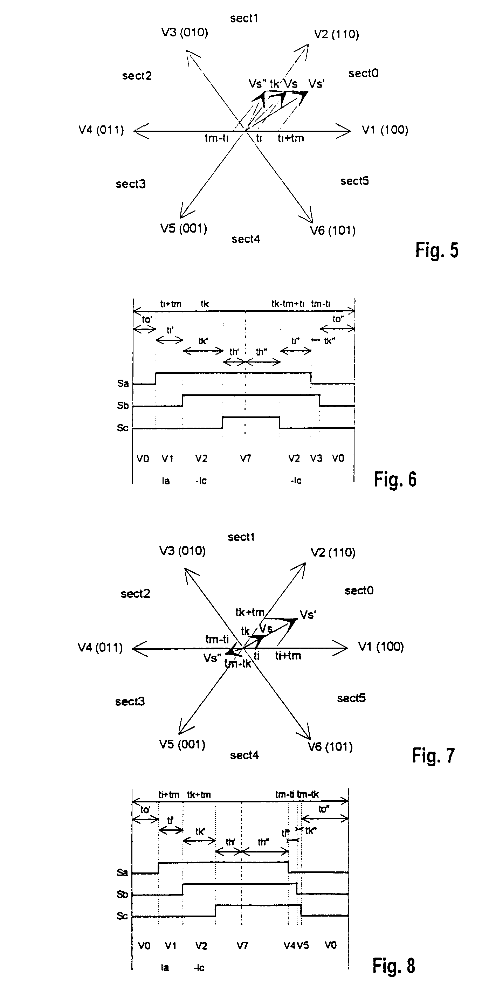

Dans le cas illustré à la figure 5, le vecteur Vs a une de ses deux composantes qui est inférieure à TMIN. Une valeur TMIN est ajoutée à cette composante de durée faible de manière à former un vecteur Vs' . Ce vecteur Vs' est associé à un vecteur Vs" tel que la moyenne vectorielle de Vs' et Vs" soit égale à Vs. Les vecteurs Vs' et Vs" sont situés dans deux secteurs adjacents.

Dans le cas illustré à la figure 7, les deux composantes du vecteur Vs sont inférieures à TMIN. Une valeur TMIN est ajoutée aux deux composantes pour former un vecteur Vs'. Le vecteur Vs" est toujours déterminé pour garder la moyenne Vs. Les vecteurs Vs' et Vs" sont situés dans deux secteurs opposés.

Vs' est appliqué durant la première moitié de la période MLI et Vs" est appliqué durant la seconde moitié de cette période MLI. Le schéma de commutation sur une période MLI est donc asymétrique. Les acquisitions de courant pourront être effectuées pendant l'application de Vs' qui a ses deux composantes supérieures ou égales à TMIN.

En variante, les vecteurs Vs' et Vs" sont appliqués sur deux périodes de MLI symétriques au lieu d'une seule période asymétrique. Cela permet d'utiliser une MLI symétrique classique, plus facile à réaliser, quitte à avoir une légère augmentation de l'oscillation sur la tension et le courant.

En variante, au lieu d'ajouter TMIN à la durée qui est insuffisante, on peut compléter la durée pour avoir juste TMIN. On réduit de ce fait les oscillations de tension et de courant malgré une augmentation de la complexité de calcul.

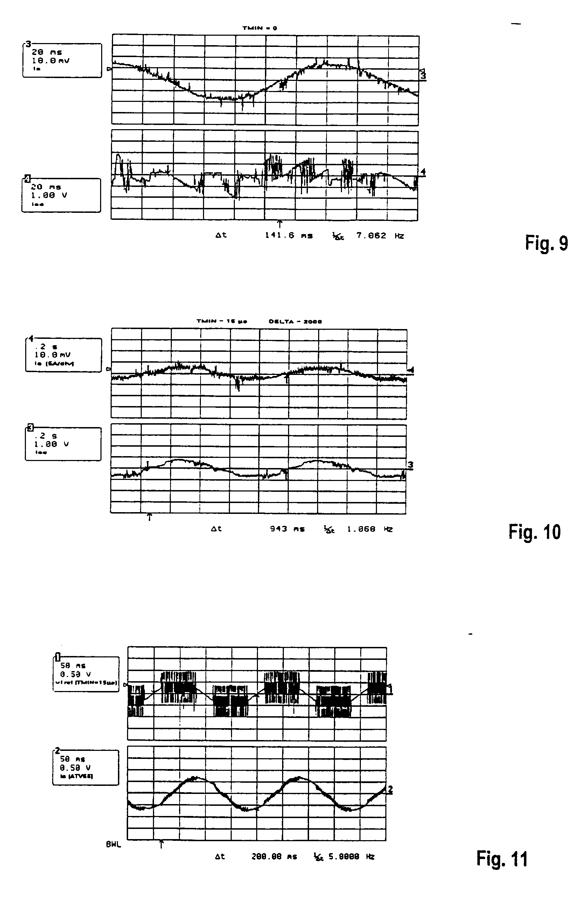

La figure 9 montre que la reconstitution est déjà mauvaise en dessous de 7 Hz si l'invention n'est pas appliquée. Si l'invention est appliquée, la reconstitution reste bonne même jusqu'à 1 Hz comme le montre la figure 10.

L'effet de la décomposition du vecteur Vs en deux vecteurs Vs' et Vs" sur deux périodes successives de MLI symétrique est visible sur la tension de référence et le courant de phase à la figure 10. Les oscillations sur le courant seront diminuées de moitié si on fait la compensation sur une seule période MLI au lieu de deux.

## Revendications

1. Convertisseur de fréquence pour moteur asynchrone comprenant un onduleur de tension (O) pourvu d'interrupteurs (Sa, Sb, Sc) pilotés par un circuit de contrôle (CC) ***de manière à délivrer au moteur une suite d'impulsions d'amplitude fixe sur une période donnée (MLI),*** et alimenté par un bus continu (B) sur lequel est disposé un shunt (Sh) de mesure du courant continu circulant sur le bus, caractérisé par le fait qu'il comporte des moyens pour calculer, dans le cas où au moins une des deux composantes du vecteur de la tension de sortie Vs est inférieure à une valeur prédéterminée TMIN, ***valeur couvrant le temps minimal pour pouvoir mesurer le courant*** ***Idc*** *circulant sur le bus continu,* d'une part un vecteur Vs' dont chacune des composantes est au moins égale à la valeur prédéterminée TMIN et d'autre part un vecteur Vs" tel que la moyenne vectorielle de Vs' et Vs" soit égale au vecteur de sortie Vs.

2. Convertisseur selon la revendication 1, caractérisé par le fait qu'il comporte des moyens pour calculer, lorsque le vecteur Vs a une de ses deux composantes qui est inférieure à TMIN, le vecteur Vs' en ajoutant une valeur prédéterminée TMIN à ladite composante.

3. Convertisseur ***selon la revendication 1****,* caractérisé par le fait qu'il comporte des moyens pour calculer, dans le cas où les deux composantes du vecteur Vs sont inférieures à la valeur prédéterminée TMIN, un vecteur Vs' en ajoutant la valeur TMIN aux deux composantes de ce vecteur Vs.

4. Convertisseur selon l'une quelconque des revendications précédentes, caractérisé par le fait que le vecteur Vs' est appliqué durant la première moitié de la période MLI et que le vecteur Vs" est appliqué durant la seconde moitié de cette même période.

5. Convertisseur selon l'une quelconque des revendications précédentes, caractérisé par le fait que les vecteurs Vs' et Vs" sont appliqués sur deux périodes successives de MLI symétriques.

6. Convertisseur selon l'une quelconque des revendications précédentes, caractérisé par le fait qu'il comporte des moyens pour calculer, lorsque le vecteur Vs a au moins une de ses deux composantes qui est inférieure à la valeur prédéterminée TMIN, le vecteur Vs' en ajoutant une durée qui complète la durée pour avoir juste la valeur prédéterminée TMIN.

## Patentansprüche

1. Frequenzwandler für Asynchronmotoren, mit einem Spannungswechselrichter (O), der mit über einen Schaltkreis (CC) gesteuerten Schaltern (Sa, Sb, Sc) bestückt ist, um dem Motor eine Reihe von Impulsen mit fester Amplitude über einen gegebenen Zeitraum (PWM) zu liefern, und der von einem Gleichstrombus (B) versorgt wird, auf dem ein Shunt (Sh) zur Messung des im Bus fliessenden Gleichstroms angeordnet ist, dadurch gekennzeichnet, dass er Mittel umfasst, um, wenn mindestens eine der beiden Komponenten des Ausgangsspannungsvektors Vs kleiner ist als ein vorgegebener Wert TMIN, ein Wert, der die minimale Zeit deckt, um den im Bus verlaufenden Strom Idc messen zu können, einerseits einen Vektor Vs' zu errechnen, dessen Komponenten jeweils mindestens dem vorgegebenen Wert TMIN entsprechen, und andererseits einen Vektor Vs", so dass der vektorielle Mittelwert von Vs' und Vs" dem Ausgangsvektor Vs entspricht.

2. Wandler nach Anspruch 1, dadurch gekennzeichnet, dass er Mittel umfasst, um, wenn eine der beiden Komponenten des Vektors Vs kleiner ist als TMIN, den Vektor Vs' zu errechnen, indem der besagten Komponenten ein vorgegebener Wert TMIN hinzugefügt wird.

3. Wandler nach Anspruch 1, dadurch gekennzeichnet, dass er Mittel umfasst, um, wenn die beiden Komponenten des Vektors Vs kleiner sind als TMIN, einen Vektor Vs' zu errechnen, indem der vorgegebene Wert TMIN den beiden Komponenten dieses Vektors Vs hinzugefügt wird.

4. Wandler nach einem der vorstehenden Ansprüche, dadurch gekennzeichnet, dass der Vektor Vs' während der ersten Hälfte der PWM-Periode angewendet und der Vektor Vs" während der zweiten Hälfte dieser gleichen Periode.

5. Wandler nach einem der vorstehenden Ansprüche, dadurch gekennzeichnet, dass die Vektoren Vs' und Vs" während zwei symmetrischen, aufeinanderfolgenden PWM-Perioden angewendet werden.

6. Wandler nach einem der vorstehenden Ansprüche, dadurch gekennzeichnet, dass er Mittel umfasst, um, wenn mindestens eine der beiden Komponenten des Vektors Vs kleiner ist als der vorgegebene Wert TMIN, den Vektor Vs' zu errechnen, indem eine Dauer hinzugefügt wird, die die Dauer ergänzt, um genau den vorgegebenen Wert TMIN zu erreichen.

## Claims

1. Frequency converter for an asynchronous motor comprising a voltage converter (0) equipped with switches (Sa, Sb, Sc) controlled by a control circuit (CC) in such a way that a stream of pulses of fixed amplitude is supplied to the motor over a given period (MLI), and powered by a DC bus (B) on which there is a shunt (Sh) measuring the DC current passing on the bus, characterized in that, for the case in which at least one of the two components of the output voltage vector Vs is less than a predetermined value TMIN, a value covering the minimum time for being able to measure the current Idc passing through the DC bus, it comprises firstly means of calculating a vector Vs', each of the two components of which is at least equal to the predetermined value TMIN, and secondly a vector Vs" such that the vectorial average of Vs' and Vs" is equal to the output vector Vs.

2. Converter according to claim 1 characterized in that, for the case in which one of the two components of vector Vs is less than TMIN, it includes means of calculating the vector Vs' by adding a predetermined value TMIN to the said component.

3. Converter according to claim 1, characterized in that, for the case in which both components of vector Vs are less than the predetermined value TMIN, it comprises means of calculating a vector Vs' by adding the value TMIN to the two components of the vector Vs.

4. Converter according to any one of the previous claims, characterized in that the vector Vs' is applied during the first half of the PWM period, and the vector Vs" is applied during the second half of the same period.

5. Converter according to any one of the previous claims, characterized in that the vectors Vs' and Vs" are applied during two successive symmetrical PWM periods.

6. Converter according to any one of the previous claims characterized in that, for the case in which at least one of the two components of the vector Vs is less than the predetermined value TMIN, it comprises means of calculating the vector Vs', by adding a duration to extend the duration to obtain exactly the predetermined value TMIN.
